# EUROPEAN PATENT SPECIFICATION

(11) **EP 2 914 048 B1**
(45) Date of publication and mention of the grant of the patent: **28.06.2017**
(21) Application number: 13867939.4
(22) Date of filing: 26.09.2013
(51) Int. Cl.: H04W 28/24, H04W 76/02, H04W 12/02, H04W 92/02, H04W 84/12

(54) **METHOD FOR ALIGNING QOS OF WLAN AND QOS OF PACKET CORE NETWORK**
VERFAHREN ZUM AUSRICHTEN DER DIENSTQUALITÄT EINES WLANS UND DER DIENSTQUALITÄT EINES PAKETKERNNETZWERKS
PROCÉDÉ POUR ALIGNER LA QOS D'UN RÉSEAU WLAN ET LA QOS D'UN RÉSEAU CENTRAL À COMMUTATION DE PAQUETS

(30) Priority: 27.12.2012 CN 201210576569
(43) Date of publication of application: 02.09.2015
(73) Proprietor: ZTE Corporation, Shenzhen, Guangdong 518057 (CN)
(72) Inventor: LIU, Guanghui, Shenzhen Guangdong 518057 (CN)
(74) Representative: HGF Limited
(86) International application number: PCT/CN2013/084340
(87) International publication number: WO 2014/101505

(56) References cited:
- CN-A- 101 009 631
- CN-A- 101 052 002
- CN-A- 102 388 578
- US-A1- 2002 007 407
- US-A1- 2005 195 813
- US-A1- 2006 294 363
- US-A1- 2008 049 695
- US-A1- 2012 263 041
- "3rd Generation Partnership Project; Technical Specification Group Services and System Aspects; Policy and charging control architecture (Release 7)", 3GPP DRAFT; 23203-7E1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] 19 July 2012 (2012-07-19), XP050909894, Retrieved from the Internet: URL:http://www.3gpp.org/ftp/Specs/2014-12/ Rel-7/23_series/> [retrieved on 2012-07-19]
- VODAFONE ET AL: "Bearer Admission Control within the Femto architecture", 3GPP DRAFT; S2-105925 PCR 23839-030_FEMTO ADMISSION CONTROL-R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jacksonville; 20101115, 19 November 2010 (2010-11-19), XP050470218, [retrieved on 2010-11-19]

## Description

### Technical Field

The present invention relates to the field of communications, and in particular, to a method for aligning QoS of a Wireless Local Area Network (WLAN) and QoS of a packet core network.

### Background of the Related Art

As wireless and terminal technologies continuously progress, the mobile Internet increasingly shows its great potential for development. More and more users are in the use of mobile Internet, and more and more services are moved from a fixed network to the mobile Internet. People can obtain any needed network information service through the mobile Internet at any time and in any place. The next generation core network is a converged network. For the next generation packet core network, it can be independent of a single wireless access technology, while accomplishing access functions of multiple wireless technologies such as Universal Mobile Telecommunications System (UMTS)/Code Division Multiple Access (CDMA)/Long Term Evolution (LTE)/Worldwide Interoperability for Microwave Access (WiMax)/wireless local area network based on IEEE 802.11b standard (WiFi) etc., and accessing multiple wireless access functional entities such as Gateway GPRS Support Node (GGSN)/Packet Data Support Node (PDSN)/SAE GW/Access GateWay (AGW)/PDG etc. to the same converged network element.

Quality of Service (QoS) is a kind of network security mechanism, which allows the user services to reach an expected service level in terms of packet loss rate, delay, jitter, and bandwidth etc. in the process of network communication. QoS in grouping access network elements is generally contracted according to a level of a service flow tunnel of each user. In addition, the wireless packet access protocol generally divides QoS required by a user into several categories, and a QoS priority, a minimum bandwidth requirement, a maximum bandwidth limit, delay, and jitter, etc. are then respectively specified in each category. These QoSs will be issued to the packet access gateway and the wireless base station device with negotiation or contract of the user, and presents scheduling of wireless resources in the air interface. On the packet access gateway device, it needs to perform scheduling by mapping the categories of QoS contracted for the services into the QoS of the bearer layers. With the expansion of users on the access gateway and increase of service categories, the access gateway device is required to not only subdivide the service traffic, but also perform uniform management and hierarchical scheduling on the transmission objects such as multiple users, a variety of services, a variety of traffics etc.

When users use mobile Internet through the WLAN, how to ensure consistency between QoS of the WLAN network and QoS of the packet core network for the users, and especially when multiple bearers are accessed in which case services performed on various bearers may be different, how to ensure that QoS of each service of each bearer is guaranteed have not been solved yet.

The document US20080049695A1 discloses a mapping table holds correspondence relation between quality of service information of wired sections and quality of service information of wireless sections. A quality of service of information converter, upon receiving encapsulated packets directed from a mobile communication network to a wireless local area network terminal, acquires quality of service information of wired sections that has been conferred to the packets, and finds quality of service information of wireless sections that corresponds to the quality of service information of wired sections in the mapping table.

The document US20060294363A1 discloses method and system for facilitating tunnel management in the 3G-WLAN interworking systems, which provides dynamic configuration of maximum number of IP Security Protocol tunnels allowed per Internet Key Exchange Security Association at the Packet Data Gateway during the initial tunnel establishment procedure.

### Summary of the Invention

In order to solve the above technical defects, a method according to claim 1, a user equipment according to claim 4 and a WLAN system according to claim 5 are provided to ensure alignment of the QoS of the WLAN network and the QoS of the packet core network when the mobile Internet is used through the WLAN, thereby improving user experience, and avoiding degradation and interruption of the user's QoS due to inconsistency between QoSs on both ends. Further improvements and embodiments are provided in the dependent claims.

Also provided is a method for aligning QoS of a Wireless Local Area Network (WLAN) and QoS of a packet core network, which comprises:
establishing multiple second Internet Protocol Security (IPSEC) tunnels between the WLAN and the packet core network, mapping different Differentiated Services Code Point (DSCP) values to different Quality of Services (QoSs) on the WLAN, and transporting the QoSs to the packet core network via the second IPSEC tunnels.

Preferably, the DSCP values are different DSCP values of different bearers created by the UE, and the DSCP values are transported to the WLAN via first IPSEC tunnels established between the UE and the WLAN.

Preferably, the method further comprises:
the WLAN performing QoS scheduling on services of the bearers according to the different DSCP values.

Preferably, mapping the different DSCP values to different QoSs on the WLAN is implemented by a configuration command.

Also provided is a user equipment, which comprises:
a connection apparatus, configured to establish multiple Internet Protocol Security (IPSEC) tunnels with a Wireless Local Area Network (WLAN), each IPSEC tunnel corresponding to a different bearer, and different Differentiated Services Code Point (DSCP) values of different bearers being transported to the WLAN via the IPSEC tunnels.

Also provided is a Wireless Local Area Network (WLAN) system, which comprises:
a connection apparatus, configured to establish multiple Internet Protocol Security (IPSEC) tunnels with a packet core network system;
a mapping apparatus, configured to map different Differentiated Services Code Point (DSCP) values to different Quality of Services (QoSs) on the WLAN; and
a transmission apparatus, configured to transmit the mapped QoSs to the packet core network system via the IPSEC tunnels.

Preferably, the WLAN system further comprises:
a scheduling apparatus, configured to perform QoS scheduling on services of the bearers according to the different DSCP values.

As the above technical schemes are used, the embodiments of the present invention can include the following advantages: it can be effectively guaranteed that uniform QoS is used between the UE and the WLAN and between the WLAN and the packet core network for scheduling, and especially when multiple bearers are accessed, end-to-end QoS can be effectively guaranteed.

### Brief Description of Drawings

The accompanying drawings described herein are used to provide a further understanding of the present invention and constitute a part of this application, and the exemplary embodiments of the present invention and the descriptions thereof are used to explain the present invention and do not constitute an improper definition of the present invention. In the accompanying drawings:
Fig. 1 is a structural diagram of a system according to an embodiment of the present invention; and
Fig. 2 is a flowchart of a method according to an embodiment of the present invention.

### Preferred Embodiments of the Present Invention

The present invention will be further described in detail below in conjunction with accompanying drawings and specific embodiments. It should be illustrated that the embodiments in the present application and various implementations in the embodiments can be combined with each other without conflict.

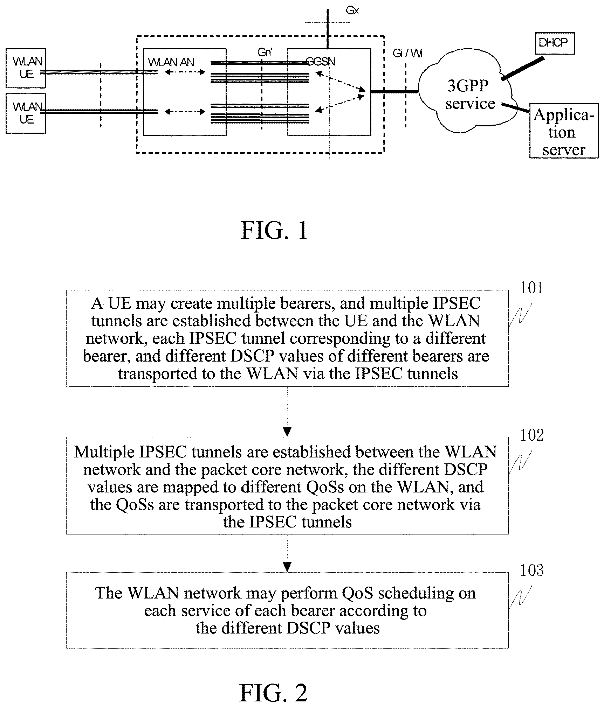

As shown in Figs. 1-2, creation of multiple bearers may be initiated by a UE, or may also be initiated by a Policy and Charging Rules Function (PCRF) network element at the network side. The PCRF network element is a device at the network side, to support Policy and Charging Control (PCC) services, and may provide PCC services to a GateWay (GW) network element of a packet core network, comprising issuing QoSs. The GW network element may be configured to prioritize the QoS carried by a message or the QoS issued by the PCRF. In applications, the QoS issued by the PCRF is generally prioritized.

A method for aligning QoS of a Wireless Local Area Network (WLAN) network and QoS of an Evolved Packet Core (EPC) network (or another packet core network) comprises the following steps.

In step 101, a UE may create multiple bearers, and multiple IPSEC tunnels are established between the UE and the WLAN network, each IPSEC tunnel corresponding to a different bearer, and different DSCP values of different bearers created by the UE are transported to the WLAN via the IPSEC tunnels.

In step 102, multiple IPSEC tunnels are established between the WLAN network and the packet core network, the different DSCP values are mapped to different QoSs on the WLAN, and the QoSs are transported to the packet core network via the IPSEC tunnels.

Wherein, mapping the different DSCP values to different QoSs on the WLAN is implemented by a configuration command. For example, the configuration is as follows.

max-down-br background begin 1 end 20 dscp 1 may specify a range of MBR corresponding to a certain DSCP value in the downlink. The method is the same for the uplink, and the method is similar for GBR etc.

In step 103, the WLAN network may perform QoS scheduling on each service of each bearer according to the different DSCP values.

QoS scheduling refers to that an edge convergence device performs QoS scheduling in advance for downlink (from the backbone network to the access network) traffics according to factors such as a topology structure, a network processing capability etc. of the access network using measures such as traffic shaping, congestion avoidance etc., to enable the traffic of the access network to be relatively stable, thereby avoiding congestion in the access network. After the QoS scheduling is used on the edge convergence device, the requirements on the QoS capability of a layer two device can be reduced. On one hand, the construction cost and the maintenance cost of the layer two network can be reduced, and on the other hand, the QoS effects of the whole network can also be improved.

The packet core network may be an EPC, or may also be a GGSN etc., and during the implementation, it is not limited thereto.

In the present embodiment, the UE accesses to the packet core network through the WLAN, and then accesses to multiple mobile networks such as a 3GPP service network through the packet core network, which can not only access to many kinds of resources, but also can achieve a fast speed, thereby guaranteeing QoS of each service of each bearer.

The present invention further provides a system for aligning QoS of a Wireless Local Area Network (WLAN) and QoS of a packet core network, which may comprise:
a UE, configured to establish multiple first IPSEC tunnels with a Wireless Local Area Network (WLAN), each first IPSEC tunnel corresponding to a different bearer, and different Differentiated Services Code Point (DSCP) values of different bearers being transported to the WLAN via the first IPSEC tunnels; and
a Wireless Local Area Network (WLAN) system, which may comprise:
   a connection apparatus, configured to establish multiple second IPSEC tunnels with a packet core network system;
   a mapping apparatus, configured to map different DSCP values to different Quality of Services (QoSs) on the WLAN and transport the mapped QoSs to the packet core network system via the second IPSEC tunnels; and
   a transmission apparatus, configured to transmit the mapped QoSs to the packet core network system via the second IPSEC tunnels.

The WLAN system may further comprise a scheduling apparatus, configured to perform QoS scheduling on services of the bearers according to the different DSCP values.

Wherein, packet core network system may be an EPC system, and during the implementation, it is not limited thereto.

The above description is only the preferred embodiments of the present invention and it is not intended to limit the protection scope of the present invention.

### Industrial Applicability

According to the embodiments of the present invention, it can be effectively guaranteed that uniform QoS is used between the UE and the WLAN and between the WLAN and the packet core network for scheduling, and especially when multiple bearers are accessed, end-to-end QoS can be effectively guaranteed.

## Claims

1. A method for aligning Quality of Service, QOS, of a Wireless Local Area Network, WLAN, and QoS of a packet core network, **characterized by** comprising:
establishing multiple second Internet Protocol Security, IPSEC, tunnels between the WLAN and the packet core network, mapping Differentiated Services Code Point, DSCP, values to QoSs on the WLAN, and transporting the QoSs to the packet core network via the second IPSEC tunnels (102);
wherein,
the DSCP values are different DSCP values of different bearers created by a user equipment, UE, and the DSCP values are transported to the WLAN via first IPSEC tunnels established between the UE and the WLAN, each first IPSEC tunnel corresponding to a different bearer (101).

2. The method according to claim 1, further comprising:
the WLAN performing QoS scheduling on services of the bearers according to the different DSCP values (103).

3. The method according to claim 2, wherein,
mapping the different DSCP values to different QoSs on the WLAN is implemented by a configuration command.

4. A user equipment, **characterized by** comprising:
a connection apparatus, configured to establish multiple first Internet Protocol Security, IPSEC, tunnels with a Wireless Local Area Network WLAN, each first IPSEC tunnel corresponding to a different bearer, and different Differentiated Services Code Point DSCP, values of different bearers being transported to the WLAN via the first IPSEC tunnels;
wherein the DSCP values indicate the WLAN to map the DSCP values to QoSs on the WLAN, and transport the QoSs to a packet core network via second IPSEC tunnels established between the UE and the packet core network.

5. A Wireless Local Area Network, WLAN, system, **characterized by** comprising:
a connection apparatus, configured to establish multiple second Internet Protocol Security, IPSEC, tunnels with a packet core network system;
a mapping apparatus, configured to map different Differentiated Services Code Point, DSCP, values to different Quality of Services, QOSs, on the WLAN; and
a transmission apparatus, configured to transmit the mapped QoSs to the packet core network system via the second IPSEC tunnels;
wherein, the different DSCP values correspond to different bearers created by a user equipment, UE; the DSCP values are transported to the WLAN via first IPSEC tunnels established between the UE and the WLAN, each first IPSEC tunnel corresponding to a different bearer.

6. The system according to claim 5, wherein, the WLAN system further comprises:
a scheduling apparatus, configured to perform QoS scheduling on services of bearers according to the different DSCP values.

## Patentansprüche

1. Verfahren zum Anpassen der Quality of Service, QoS, eines Wireless Local Area Network, WLAN und der QoS eines Paketkernnetzes, **dadurch gekennzeichnet, dass** es Folgendes umfasst:
Einrichten mehrerer zweiter Tunnel für die Internet Protocol Security, IPSEC, zwischen dem WLAN und dem Paketkernnetz, Zuordnen von Werten für den Differentiated Services Code Point, DSCP, zu QoSs in dem WLAN und Transportieren der QoSs zu dem Paketkernnetz über die zweiten IPSEC-Tunnel (102);
wobei
die DSCP-Werte unterschiedliche DSCP-Werte für unterschiedliche Träger sind, die von einer Benutzereinrichtung, UE, erzeugt werden
und die DSCP-Werte zu dem WLAN über erste IPSEC-Tunnel transportiert werden, die zwischen der UE und dem WLAN eingerichtet werden, wobei jeder erste IPSEC-Tunnel einem anderen Träger entspricht (101).

2. Verfahren nach Anspruch 1, ferner umfassend:
das WLAN, das eine QoS-Planung für Dienste der Träger gemäß den unterschiedlichen DSCP-Werten durchführt (103).

3. Verfahren nach Anspruch 2, wobei
das Zuordnen der unterschiedlichen DSCP-Werte zu unterschiedlichen QoSs in dem WLAN durch einen Konfigurationsbefehl implementiert wird.

4. Benutzereinrichtung, **dadurch gekennzeichnet, dass** sie Folgendes umfasst:
eine Verbindungsvorrichtung, die konfiguriert ist, um mehrere erste Tunnel für die Internet Protocol Security, IPSEC, mit einem Wireless Local Area Network, WLAN, einzurichten, wobei jeder erste IPSEC-Tunnel einem anderen Träger entspricht und unterschiedliche Werte für den Differentiated Services Code Point, DSCP, von unterschiedlichen Trägern zu dem WLAN über die ersten IPSEC-Tunnel transportiert werden;
wobei die DSCP-Werte dem WLAN anzeigen, dass es die DSCP-Werte zu QoSs in dem WLAN zuordnen und die QoSs zu einem Paketkernnetz über zweite IPSEC-Tunnel transportieren soll, die zwischen der UE und dem Paketkernnetz eingerichtet werden.

5. Wireless Local Area Network, WLAN, -System, **dadurch gekennzeichnet, dass** es Folgendes umfasst:
eine Verbindungsvorrichtung, die konfiguriert ist, um mehrere zweite Tunnel für die Internet Protocol Security, IPSEC, mit einem Paketkernnetzsystem einzurichten;
eine Zuordnungsvorrichtung, die konfiguriert ist, um unterschiedliche Werte für den Differentiated Services Code Point, DSCP, unterschiedlichen QoSs in dem WLAN zuzuordnen; und
eine Übertragungsvorrichtung, die konfiguriert ist, um die zugeordneten QoSs dem Paketkernnetzsystem über die zweiten IPSEC-Tunnel zuzuordnen;
wobei die unterschiedlichen DSCP-Werte unterschiedlichen Trägern entsprechen, die von einer Benutzereinrichtung, UE, erzeugt werden;
die DSCP-Werte zu dem WLAN über erste IPSEC-Tunnel transportiert werden, die zwischen der UE und dem WLAN eingerichtet werden, wobei jeder erste IPSEC-Tunnel einem anderen Träger entspricht.

6. System nach Anspruch 5, wobei das WLAN-System ferner Folgendes umfasst:
eine Planungsvorrichtung, die konfiguriert ist, um eine QoS-Planung für Dienste von Trägern gemäß den unterschiedlichen DSCP-Werten durchzuführen.

## Revendications

1. Procédé d'alignement de la Qualité de Service, QoS, d'un réseau local sans fil, WLAN, et de la QoS d'un réseau central à commutation de paquets, **caractérisé en ce qu'**il comprend :
l'établissement de multiples deuxièmes tunnels de sécurité IP, IPSEC, entre le réseau WLAN et le réseau central à commutation de paquets,
le mappage des valeurs de point de code de services différenciés, DSCP, en valeurs de QoS sur le réseau WLAN, et
le transport des valeurs QoS jusqu'au réseau central à commutation de paquets via les deuxièmes tunnels IPSEC (102) ;
dans lequel,
les valeurs DSCP sont des valeurs DSCP différentes de porteuses différentes créées par un équipement utilisateur, UE,
et les valeurs DSCP sont transportées jusqu'au réseau WLAN via des premiers tunnels IPSEC établis entre l'UE et le réseau WLAN, chaque premier tunnel IPSEC correspondant à une porteuse différente (101).

2. Procédé selon la revendication 1, comprenant en outre :
l'exécution d'une programmation de QoS par le réseau WLAN sur des services des porteuses en se basant sur les différentes valeurs DSCP (103).

3. Procédé selon la revendication 2, dans lequel,
le mappage des différentes valeurs DSCP en différentes valeurs de QoS sur le réseau WLAN est mis en oeuvre par une commande de configuration.

4. Équipement d'utilisateur, **caractérisé en ce qu'**il comprend :
un appareil de connexion, configuré pour établir de multiples premiers tunnels de sécurité IP, IPSEC, avec un réseau local sans fil, WLAN,
chaque premier tunnel IPSEC correspondant à une porteuse différente, et des valeurs de point de code de services différenciés, DSCP, différentes de porteuses différentes étant transportées jusqu'au réseau WLAN via les premiers tunnels IPSEC ;
dans lequel les valeurs DSCP indiquent au réseau WLAN de mapper les valeurs DSCP en valeurs QoS sur le réseau WLAN, de transporter les valeurs QoS jusqu'au réseau central à commutation de paquets via les deuxièmes tunnels IPSEC établis entre l'UE et le réseau central à commutation de paquets.

5. Système de réseau local sans fil, WLAN, **caractérisé en ce qu'**il comprend :
un appareil de connexion, configuré pour établir de multiples deuxièmes tunnels de sécurité IP, IPSEC, avec un système de réseau central à commutation de paquets ;
un appareil de mappage, configuré pour mapper différentes valeurs de point de code de services différenciés, DSCP, en différentes valeurs de QoS sur le réseau WLAN, et
un appareil de transmission, configuré pour transmettre les valeurs QoS mappées jusqu'au système de réseau central à commutation de paquets via les deuxièmes tunnels IPSEC ;
dans lequel, les différentes valeurs DSCP correspondent à différentes porteuses crées par un équipement utilisateur, UE,
les valeurs DSCP sont transportées jusqu'au réseau WLAN via des premiers tunnels IPSEC établis entre l'UE et le réseau WLAN, chaque premier tunnel IPSEC correspondant à une porteuse différente.

6. Système selon la revendication 5, dans lequel le système WLAN comprend en outre :
un appareil de programmation, configuré pour exécuter une programmation QoS sur des services des porteuses en se basant sur les différentes valeurs DSCP.
